# EUROPEAN PATENT APPLICATION

(11) **EP 1 431 741 A2**
(43) Date of publication of application: **23.06.2004**
(21) Application number: 03024334.9
(22) Date of filing: 24.10.2003
(51) Int. Cl.: G01M 17/02, G01L 5/16, B60T 8/00, B60C 23/06

(54) **System for detecting the trace of a tire on the ground**

(30) Priority: 29.11.2002 IT TO20021041
(71) Applicant: C.R.F. Società Consortile per Azioni, 10043 Orbassano (Torino) (IT)
(72) Inventor: Butera, Francesco, 10100 Torino (IT); Zanella, Alessandro, 10100 Torino (IT)
(74) Representative: Notaro, Giancarlo

(57) **Abstract**

A motor vehicle tire is associated to sensors (6) detecting the size and shape of tire trace on the ground and sending output signals to processing means (8).

## Description

The present invention relates to detection systems associated to motor vehicle tires.

It is already known about pressure sensors associated to a motor vehicle tire, which can transmit through a wireless transmission network data concerning tire inflation pressure to receiving means, which can signal the measured pressure value to a motor vehicle driver.

Document EP-A-0 937 615 discloses a system for measuring the force transmitted between the tire of a vehicle and the ground, which comprises a radio inquiry system with an antenna for sending high frequency inquiry pulses and for receiving response signals. A radio sensor equipped with an antenna is incorporated into the tire and is designed to store the energy of a corresponding inquiry pulse into a storage means and to provide a corresponding time-delayed response signal, which contains its respective sensor signal.

Document EP-A-0 924 112 discloses a sensor for detecting revolutions of a rotating tire, comprising a stiff basic element designed to be connected to the radially inner surface of the tire in the tread area with two supports placed at a given distance one to the other and a force sensor element placed between the latter so as to generate a counting signal, and means for processing said signal so that after tire rotation a force variation is applied to the force sensor element due to the change in the radius of tire tread in the area in contact with the ground.

The object of the present invention is to provide a detection system associated to a vehicle tire, whose response can be used to optimize vehicle behavior on the road, by acting upon one or more adjustable parameters responsible for motor vehicle behavior, such as features characterizing vehicle suspensions or braking system, or motor operating parameters, in order to ensure for instance an optimal road-holding and/or a better driving comfort.

In view of achieving this object, an object of the invention is a detection system comprising sensor means associated to a motor vehicle tire, characterized in that said sensor means are designed to detect the size and shape of tire trace on the ground.

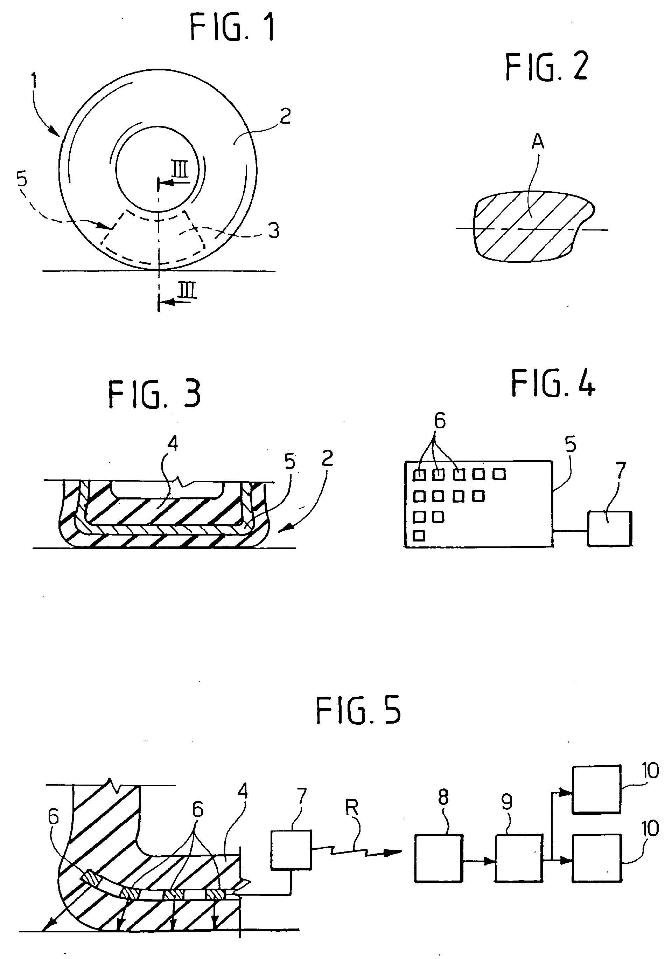

The term "trace" refers to the area on the ground with which the outer surface of the tire is in direct contact. A typical example of trace of a motor vehicle tire can be seen for instance in Figure 2 of the accompanying drawings.

According to its most general feature, the present invention consists - more than in the way in which said sensor means can be carried out - in the idea of arranging sensor means in a motor vehicle tire, which are destined to detect the size and shape of tire trace. Though already including sensor means associated to a tire, all known devices indeed use said sensor means for obtaining different information, as already mentioned above.

On the basis of the detection of tire trace the system according to the invention can cooperate with actuating means provided on the motor vehicle for varying one or more parameters of said motor vehicle (chosen for instance among features characterizing suspensions or braking system, or motor operating parameters), in order to optimize driving comfort, road-holding and in general motor vehicle safety.

According to a further feature of the invention, the aforesaid sensor means comprise a plurality of sensors associated to a portion of the tire, said sensors being chosen among: piezoelectric sensors, electrically active polymers, fabrics with piezoelectric fibers, fabrics consisting of electrically active polymers, independent piezoelectric fibers, fibers of electrically active polymers, and are incorporated into the tire so as to issue signals indicating the stresses undergone by the various areas of the tire and subsequently the presence or absence of contact with the ground of each area of the tire.

According to a variant, the sensor means comprise a plurality of emitters of ultrasonic vibrations and of receivers detecting the ultrasonic signal issued and then reflected by the ground, so as to determine again the presence or absence of contact with the ground of each area of the tire.

According to a further feature, an object of the invention is also a method for detecting data related to a motor vehicle tire, whose main characteristic consists in that the size and shape of tire trace on the ground are detected.

According to a still further feature, an object of the invention is also a motor vehicle with at least a wheel equipped with a tire incorporating the system according to the invention, processing means for processing the output signals from the aforesaid sensor means of the system incorporated into the tire, and actuating means activated by said processing means in order to act upon one or more parameters of the motor vehicle. The output signals from the sensor means are sent to the processing means through a wireless transmission network.

Further characteristics and advantages of the invention shall be evident from the following description referring to the accompanying drawings, provided as a mere non-limiting example, in which:
Figure 1 is a schematic lateral view of a motor vehicle wheel incorporating a system according to the invention,
Figure 2 shows a plan view of the trace of the wheel tire of Figure 2 on the ground,
Figure 3 is a section according to line III-III of Figure 1,
Figure 4 is a view developed on a plane of a plate supporting a sensor matrix incorporated into the tire of Figure 3,
Figure 5 is a partial magnified, scale view of a tire section, together with a block diagram showing a variant of the invention.

With reference to Figure 1, a motor vehicle wheel 1 comprises a tire 2 of any known type having a sector 3. On said sector 3 the tread 4 of the tire 2 incorporates a sheet or fabric 5 made of any suitable material, which is shown as developing on a plane in Figure 4. A sensor matrix 6 is applied onto the element 5, which sensors can be for instance piezoelectric sensors or electrically active polymers, issuing an electric signal as a consequence of a mechanical stress applied thereon. The sensors 6 are connected to a transmission unit sending through a wireless transmission network output signals from said sensors to a processing unit 8, shown in Figure 5.

The transmission unit can be supplied by means of a rechargeable battery, recharged by the energy obtained from the deformation undergone by piezoelectric sensors placed on the tire. To said purpose the system can detect tire deformation from an average value calculated on several rotation cycles of said tire, transmitting the information with a given time lapse depending on the need of the control central unit of the actuating system or on explicit request of the supply central unit of the actuating system. Thus, some rotation cycles of the wheel can be used to recharge the transmission system instead of being used for the detection of tire deformation.

On the basis of the stresses undergone by sensors 6 it can be inferred whether the tire portion corresponding to each sensor is in contact with the ground. The processing means can thus restore the size and shape of tire trace A (Figure 2) on the ground. After said determination the processing means 8 activate actuating means 9 (Figure 5), which can thus act upon one or more systems 10 of the motor vehicle, such as for instance a system for adjusting the stiffness of motor vehicle suspensions, or a system for adjusting the characteristics of braking system.

Figure 5 shows a sectioned view of a variant in which each sensor 6 is a piezoelectric emitter of ultrasonic vibrations, which can issue - when excited - an ultrasonic signal reflected by the ground. The sensors 6 further comprise means for detecting the reflected response signal. Depending on response times it can thus be determined whether each tread portion is in contact or not with the ground.

As is evident, the system according to the invention is associated only to a tire sector, and can therefore detect the tire trace at every rotation revolution of the wheel when said sector goes upon the ground. However, it is not to be excluded to associate the sensor means to the whole circumferential extension of the tire. Furthermore, in a motor vehicle one or more wheels can be arranged as described before.

In Figure 5 arrow R schematically refers to a wireless transmission network enabling to send output data from the transmission unit 7 to the processing unit 8.

Obviously, though the basic idea of the invention remains the same, construction details and embodiments can widely vary with respect to what has been described and shown by mere way of example, however without leaving the framework of the present invention.

## Claims

1. Detection system for a motor vehicle tire, comprising sensor means associated to the tire, **characterized in that** said sensor means are adapted to detect the size and shape of the tire trace on the ground.

2. Detection system according to claim 1, **characterized in that** said sensor means comprise a plurality of sensors (6) associated to the tire.

3. Detection system according to claim 2, **characterized in that** said sensors (6) are associated to a section (3) of the tire and are incorporated into the tread of the tire.

4. Detection system according to claim 3, **characterized in that** said sensors (6) are chosen among piezoelectric sensors, electrically active polymers, fabrics with piezoelectric fibers, fabrics consisting of electrically active polymers, piezoelectric fibers, fibers of electrically active polymers, and are designed to issue signals indicating the stresses applied thereon and subsequently the presence or absence of contact with the ground.

5. Detection system according to claim 3, **characterized in that** said sensors are emitters generating an ultrasonic signal and are further designed to detect the response signal reflected by the ground.

6. Detection system according to claim 5, **characterized in that** said emitters are piezoelectric elements generating an ultrasonic vibration.

7. Detection system according to claim 1, **characterized in that** said sensor means are designed to send output signals to processing means (8).

8. Detection system according to claim 7, **characterized in that** said processing means (8) send an output signal to actuating means (9) which can act upon one or more systems (10) for adjusting one or more parameters of the motor vehicle, such as features characterizing vehicle suspensions or braking system.

9. Detection system according to claim 7, **characterized in that** the output signals from the sensors (6) are transmitted by a transmission unit (7) to a receiving unit associated to the aforesaid processing means (8) by means of a wireless transmission network (R).

10. Detection system according to claim 9, **characterized in that** the transmission unit is supplied through a rechargeable battery, which is recharged by the energy obtained from the deformation of piezoelectric sensors placed on the tire.

11. Detection system according to claim 10, **characterized in that** said system is designed to detect tire deformation from an average value calculated on several rotation cycles of said tire, transmitting the information with a given time lapse depending on the need of the control central unit of the actuating system or on explicit request of the supply central unit of the actuating system.

12. Detection system according to claim 11, **characterized in that** some rotation cycles of the wheel are used to recharge the transmission system instead of being used to detect tire deformation.

13. Method for detecting data in a motor vehicle tire, **characterized in that** the shape and size of the tire trace on the ground are detected.

14. Motor vehicle, **characterized in that** it comprises at least a wheel with a tire equipped with a detection system according to any of the claims 1-9.
